# EUROPÄISCHE PATENTSCHRIFT

(11) **EP 4 099 814 B1**
(45) Veröffentlichungstag und Bekanntmachung des Hinweises auf die Patenterteilung: **25.03.2026**
(21) Anmeldenummer: 21702976.8
(22) Anmeldetag: 01.02.2021
(51) Int. Cl.: A01C 21/00, A01N 59/20, A01N 25/00, A01N 25/08, A01N 33/12, A01N 37/42

(54) **VERFAHREN ZUM VERBESSERN DER STANDFESTIGKEIT EINER KULTURPFLANZE**
METHOD FOR IMPROVING THE STABILITY OF A CULTIVATED PLANT
PROCÉDÉ D'AMÉLIORATION DE LA STABILITÉ D'UNE PLANTE CULTIVÉE

(30) Priorität: 04.02.2020 DE 102020102829
(43) Veröffentlichungstag der Anmeldung: 14.12.2022
(73) Patentinhaber: Omnicult Farmconcept GmbH, 65549 Limburg (DE)
(72) Erfinder: FISCHER, Marc, 65597 Hünfelden (DE); SCHMIDT, Hartmut Manfred, 44892 Bochum (DE)
(74) Vertreter: WSL Patentanwälte Partnerschaft mbB
(86) Internationale Anmeldenummer: PCT/EP2021/052243
(87) Internationale Veröffentlichungsnummer: WO 2021/156169

(56) Entgegenhaltungen:
- EP-A1- 1 720 408
- EP-B1- 1 720 408
- WO-A1-2014/063667
- CN-A- 102 503 659
- CN-A- 108 752 107

## Beschreibung

Die vorliegende Erfindung betrifft ein Verfahren zum Behandeln einer Getreide-Kulturpflanze auf einer Ackerfläche, wobei das Verfahren vorsieht, dass ein konventioneller Anwendungsplan, bei dem wenigstens einmal eine bestimmte Menge eines oder mehrerer Wachstumsregler zu einem oder mehreren bestimmten Zeitpunkt gespritzt wird, modifiziert wird.

Gesunde Pflanzen sind Voraussetzung für eine ertragreiche Erzeugung in der Landwirtschaft, denn der Befall von Kulturpflanzen mit phytopathogenen Bakterien, Pilzen oder Viren, kann zu erheblichen Ertragseinbußen führen, ebenso wie die Schädigung durch Insektenfraß oder Fraßschäden durch andere Pflanzenschädlinge. Zum Schutz der Pflanzengesundheit werden daher vielfach Schadorganismen bekämpfende Pflanzenschutzmittel (Herbizide, Fungizide, Insektizide, Nematizide, Rodentizide) ausgebracht.

Ein wichtiges Merkmal gesunder Pflanzen ist aber auch eine hohe Standfestigkeit. Starke Windböen und Regenfälle können in Kulturpflanzenbeständen nämlich dazu führen, dass Pflanzen nester- oder streifenweise über größere Flächen hinweg umknicken ("Lager"). Besonders anfällig hierfür sind beispielsweise Getreide, Flachs, Mais, Raps und Kartoffeln.

Das Lagern führt zu einer deutlich erschwerten Ernte und zu verminderter Qualität. Moderne Mähmaschinen können lagernde Ackerfrüchte zwar teilweise noch ernten, umgefallene Pflanzen können nach der Ernte aber meist nicht mehr zu hochwertigeren Gütern verarbeitet werden und insbesondere bei Pflanzen, die bereits in einem frühen Entwicklungsstadium lagern sind teils erhebliche Ertragseinbußen festzustellen.

Zur Verbesserung der Standfestigkeit werden in der Landwirtschaft Wachstumsregler eingesetzt.

Hierbei handelt es sich um Mittel die das Pflanzenwachstum beeinflussen, beispielweise indem das Streckungswachstum verringert wird, was dazu führt, dass die Pflanzen eingekürzt und die Sprosse so stabiler gemacht werden. Die meisten Wachstumsregler sind natürliche Phytohormone oder deren synthetische Analoga. Da Wachstumsregler grundlegend in die hormonelle Steuerung des Pflanzenwachstums eingreifen, kann eine Überdosierung allerdings auch negative Folgen haben.

Der Einsatz von Wachstumsreglern ist von vielen Faktoren abhängig, wie z.B. Pflanzensorte, Nährstoffversorgung, Wasserversorgung, Bodenart und Witterung. Im landwirtschaftlichen Ackerbau stellt sich dabei nicht nur die Frage, ob eine Applikation von Wachstumsreglern ertragsfördernd wirken wird, sondern auch die Frage, welche Mengen appliziert werden müssen, um die angestrebte Ertragssteigerung tatsächlich zu erzielen. Schon kleine Abweichungen vom Optimum können hier starke Auswirkungen haben.

Ein typischer konventioneller Anwendungsplan für Wachstumsregler sieht eine zweimalige Anwendung vor, indem bei einer ersten Spritzung eine bestimmte Menge an Wachstumsregler appliziert wird und bei einer zweiten Spritzung noch einmal eine bestimmte Menge an Wachstumsregler, die entweder größer, geringer oder gleich der bei der ersten Spritzung applizierten Menge sein kann.

Ein Verfahren zur Behandlung einer Kulturpflanze auf einer Ackerfläche mit einem Wachstumsregler und einer hohen Silizumkonzentration ist aus CN 102 503 659 A bekannt.

Aus verschiedenen Gründen besteht ein Bedarf nach einem Verfahren, mit dem man die Mengen an Wachstumsregler, die bei einem konventionellen Anwendungsplan ausgebracht werden, reduzieren kann. Zum einen bedeuten geringere Mengen typischerweise auch geringere Kosten. Zum anderen ist es aus ökologischen Gründen insgesamt gewünscht, die Menge an in der Landwirtschaft eingesetzten Wachstumsreglern zu reduzieren.

Bei der Reduzierung von Wachstumsreglern muss allerdings äußerst vorsichtig vorgegangen werden. Schließlich besteht immer das Risiko, dass eine auch nur geringfügig zu starke Reduzierung zu erheblichen Ertragseinbußen oder gar zum vollständigen Ernteausfall führt.

Mit der vorliegenden Erfindung wird daher ein Verfahren gemäß Anspruch 1 vorgeschlagen.

Die erfindungsgemäß vorgeschlagene Modifizierung eines konventionellen Anwendungsplans führt dazu, dass die Menge an Wachstumsregler, die nach dem modifizierten Anwendungsplan eingesetzt wird, geringer als die Menge ist, die nach dem konventionellen Anwendungsplan eingesetzt werden müsste. Es können somit Anschaffungskosten für Wachstumsregler eingespart werden und die Belastung der Umwelt durch Wachstumsreglereintrag kann verringert werden.

Die vorliegende Erfindung betrifft ein Verfahren zum Behandeln einer Getreide-Kulturpflanze auf einer Ackerfläche. Der Begriff "Kulturpflanze" ist dabei so zu verstehen, dass hiervon alle in Kultur wachsenden Pflanzen erfasst werden, die einer wirtschaftlichen Nutzung zugeführt werden, und umfasst zum einen Nutzpflanzen und zum anderen Zierpflanzen.

Der Begriff "Nutzpflanze" umfasst solche Kulturpflanzen, die in der weiteren Verwertung als Nahrungsmittel, Genussmittel, Heilpflanze, Viehfutter oder für technische Zwecke (nachwachsende Rohstoffe) genutzt werden. Der Begriff "Nutzpflanze" umfasst insbesondere die typischen Feldfrüchte, die traditionell im landwirtschaftlichen Ackerbau zum Einsatz kommen, wie z.B. Getreide, Hülsenfrüchte, Hackfrüchte und Ölpflanzen, aber auch Gemüse- und Obstpflanzen.

Unter einem Verfahren zur Verbesserung der "Standfestigkeit" einer Pflanze ist zu verstehen, dass durch die Anwendung des Verfahrens die Pflanzenteile, insbesondere die Sprosse, weniger dazu neigen bei mechanischer Belastung umzuknicken oder abzubrechen. Eine verbesserte Standfestigkeit bedeutet somit eine höhere Widerstandskraft der behandelten Pflanzen gegen starke Windböen und Regenfälle. In Pflanzenbeständen mit einer verbesserten Standfestigkeit treten daher auch unter Witterungsbedingungen mit starkem Wind und Regen deutlich weniger Lager auf.

Der Begriff "Anwendungsplan" bezeichnet im Zusammenhang mit der vorliegenden Erfindung einen Plan für die Anwendung eines Wachstumsreglers auf einer auf einem Acker angebauten Pflanze, wobei der Plan zumindest die Menge des angewendeten Mittels (pro Anwendung) und die Anzahl der Anwendungen des Mittels umfasst.

Unter einem "konventionellen" Anwendungsplan sind all diejenigen Anwendungspläne zu verstehen, die herkömmlich Anwendung finden und die nicht alle Verfahrensschritte des erfindungsgemäßen modifizierten Anwendungsplanes umfassen. Dementsprechend stellt der "modifizierte" Anwendungsplan einen erfindungsgemäß abgewandelten "konventionellen" Anwendungsplan dar.

Das "Behandeln der Kulturpflanze" nach dem modifizierten Anwendungsplan bedeutet, dass die auf einer Ackerfläche angebauten Kulturpflanzen mit den im modifizierten Anwendungsplan festgelegten Maßnahmen behandelt werden. Die dabei angewendeten Mittel können auf herkömmliche Art ausgebracht werden, insbesondere durch Spritzung.

Der Begriff "Acker" bzw. die "Ackerfläche" bezeichnet hierjede Anbaufläche für eine Kulturpflanze, und eine "Ackerflächeneinheit" ist eine definierte Flächeneinheit (z.B. Quadratmeter, Ar, Hektar) des Ackers.

Die erfindungsgemäß vorgeschlagene Modifizierung eines konventionellen Anwendungsplans führt dazu, dass die zweite Menge an Wachstumsregler, die nach dem modifizierten Anwendungsplan eingesetzt wird, geringer als die erste Menge ist, die nach dem konventionellen Anwendungsplan eingesetzt werden müsste.

Bei bestimmten Ausführungsformen beträgt die zweite Menge pro Ackerflächeneinheit des ersten Wachstumsreglers 75 % oder weniger, vorzugsweise 50 % oder weniger und besonders bevorzugt 25 % oder weniger der ersten Menge pro Ackerflächeneinheit des ersten Wachstumsreglers. Bei manchen Ausführungsformen der Erfindung ist die zweite Menge pro Ackerflächeneinheit gleich Null bei anderen größer als Null.

"Wachstumsregler" im Sinne der vorliegenden Erfindung sind Mittel, die das Pflanzenwachstum beeinflussen. Hierzu zählen insbesondere natürliche Phytohormone oder deren synthetische Analoga, sowie Aktivatoren und Inhibitoren von Phytohormonen oder Stoffe, die in den pflanzlichen Phytohormon-Stoffwechsel regulierend eingreifen.

Erfindungsgemäß ist der Wachstumsregler ausgewählt unter Mepiquat, Trinexapac, Prohexadion, sowie deren Salzen, Estern und anderen Derivaten oder einer Kombination der vorgenannten Wachstumsregler.

Die vorliegende Erfindung umfasst auch solche Ausführungsvarianten, bei denen der konventionelle Anwendungsplan zwei oder mehr Spritzungen mit Wachstumsregler umfasst.

Bei den Ausführungsvarianten, bei denen der konventionelle Anwendungsplan mehr als zwei Spritzungen mit Wachstumsregler umfasst, sieht der modifizierte Anwendungsplan vorzugsweise einen modifizierten Zeitpunkt zumindest für die erste Spritzung oder die zweite Spritzung vor.

Bei bestimmten Ausführungsformen liegt der Zeitpunkt für die zweite Spritzung nach dem Zeitpunkt der ersten Spritzung. Bei alternativen Ausführungsformen liegt der Zeitpunkt für die zweite Spritzung vor dem Zeitpunkt der ersten Spritzung.

Bei manchen Ausführungsformen der Erfindung ist der Zeitpunkt für das Ausbringen des Silizium enthaltenden Stoffgemischs gleich dem Zeitpunkt für die erste Spritzung. Bei anderen Ausführungsformen wird das Silizium enthaltende Stoffgemisch und zumindest der erste oder der zweite Wachstumsregler gemischt und in einem Arbeitsgang gespritzt.

Bei bestimmten Ausführungsformen der Erfindung umfasst der konventionelle Anwendungsplan weiterhin
eine sechste Menge pro Ackerflächeneinheit eines Silizium enthaltenden Stoffgemischs für ein Ausbringen und
einen Zeitpunkt für das Ausbringen des Silizium enthaltenden Stoffgemischs mit der sechsten Menge pro Ackerflächeneinheit.

Vorzugsweise handelt es sich bei dem in einer sechsten Menge ausgebrachten Silizium enthaltenden Stoffgemisch um ein flüssiges Silizium enthaltendes Stoffgemisch, das durch Spritzung ausgebracht wird.

Unter einem "Silizium enthaltenden Stoffgemisch" ist im Zusammenhang mit der vorliegenden Erfindung ein Stoffgemisch zu verstehen, das Silizium in einer von Pflanzen resorbierbaren Form bereitstellt.

Erfindungsgemäß wird ein Silizium enthaltendes flüssiges Stoffgemisch eingesetzt, dass für eine Spritzung geeignet ist. Hierfür muss das Silizium enthaltende flüssige Stoffgemisch durch entsprechende Spritzdüsen versprüht werden können. Bei bestimmten Ausführungsformen handelt es sich bei dem Silizium enthaltenden flüssigen Stoffgemisch um eine Suspension von Silizium enthaltenden Feststoffpartikeln oder um eine Lösung von löslichen Siliziumverbindungen oder um ein flüssiges Stoffgemisch indem sowohl Silizium enthaltende Feststoffpartikel suspendiert sind als auch lösliche Siliziumverbindungen gelöst sind. Vorzugsweise sind die Silizium enthaltenden Feststoffpartikel und/oder die löslichen Siliziumverbindungen in wässriger Suspension bzw. Lösung suspendiert bzw. gelöst.

Bei bestimmten Ausführungsformen liegt die Konzentration der Silizium enthaltenden Feststoffpartikel und/oder der löslichen Siliziumverbindungen jeweils für sich genommen oder in Summe bezogen auf das Gesamtgewicht des flüssigen Stoffgemisches im Bereich von 0,1 bis 50,0 Gew.-%, besonders bevorzugt im Bereich von 0,1 bis 30,0 Gew.-% und noch bevorzugter im Bereich von 0,1 bis 25,0 Gew.-%. Bei bestimmten Ausführungsformen liegt die Untergrenze bei wenigstens 0,2 Gew.-%, wenigstens 0,5 Gew.-% oder wenigstens 1,0 Gew.-%.

Bei bestimmten Ausführungsformen wird das flüssige Silizium enthaltende Stoffgemisch mit den oben angegebenen Konzentrationen unmittelbar vor der Spritzung um das 10-fache bis 1500-fache verdünnt, vorzugsweise um das 10-fache bis 1000-fache, besonders bevorzugt um das 10-fache bis 500-fache.

Unter einem "Silizium enthaltenden Stoffgemisch" ist im Zusammenhang mit der vorliegenden Erfindung ein Stoffgemisch zu verstehen, das Silizium in einer von der Kulturpflanze resorbierbaren Form bereitstellt, vorzugweise in einer über die Wurzel und/oder das Blatt resorbierbaren Form bereitstellt. Besonders bevorzugt handelt es sich um ein Stoffgemisch, das Silizium in einer von der Kulturpflanze über das Blatt resorbierbaren Form bereitstellt.

Vorzugsweise liegt der pH-Wert des Silizium enthaltenden flüssigen Stoffgemisches im Bereich von 2 bis 10, besonders bevorzugt im Bereich von 3 bis 9, noch bevorzugter im Bereich von 4 bis 8 und ganz besonders bevorzugt im Bereich von 5 bis 7.

Bei bestimmten Ausführungsformen wird das Silizium enthaltende Stoffgemisch in Form von Silizium enthaltendem Gesteinsmehl bereitgestellt, das silikatische Mineralien und/oder Siliziumdioxid enthält oder hieraus besteht. Vorzugsweise wird das Gesteinsmehl in Form einer wässrigen Suspension des Gesteinsmehls bereitgestellt.

Vorzugsweise ist das Silizium enthaltende Gesteinsmehl ausgewählt unter Tonmineralen, Schichtsilikaten und Gerüstsilikaten, wie z.B. Glimmer, Talk, Serpentin, Vermiculit, Muskovit, Bentonit, Zeolith und Kaolinit, oder unter silikatischen Vulkaniten, wie z.B. Pikrit, Basalt, Andesit, Dazit und Granit. Der Siliziumanteil in dem Silizium enthaltenden Gesteinsmehl liegt (berechnet als SiO₂) vorzugsweise im Bereich von 40 bis 80 Gew.-%, noch bevorzugter im Bereich von 60 bis 80 Gew.-%.

Bei bestimmten Ausführungsformen wird das Silizium enthaltende Stoffgemisch in Form von Silikaten und/oder in Form von Monokieselsäure und/oder in Form einer Polykieselsäure bereitgestellt.

Vorzugsweise handelt es sich bei den Silikaten um Salze und Ester der Ortho-Kieselsäure (Si(OH)₄) und deren Kondensate. Beispiele für Salze der Ortho-Kieselsäure sind Alkali- und Erdalkalisilikate. Beispiele für Ester der Ortho-Kieselsäure sind C₁-C₁₂-Alkylorthosilikate. Vorzugsweise handelt es sich hierbei um wasserlösliche Silikate.

Bei Ausführungsformen mit Monokieselsäure und/oder Polykieselsäure liegt diese vorzugsweise stabilisiert vor, bevorzugt stabilisiert mit Polysacchariden, Polyalkoholen, Huminsäuren, Fulvinsäuren, Makro- oder Mikronährstoffen, organischen Säuren, Salzen organischer Säuren, Esther organischer Säuren, Carbonsäuren, Chinolin, anorganischen Säuren, Algen, Melasse, Betain, Pflanzenextrakten, Aminosäuren oder einer Kombination davon.

In bestimmten Ausführungsformen führt die Spritzung mit der Silizium enthaltenden Substanz gemäß dem modifizierten Anwendungsplan zusätzlich zu einem verbesserten Schutz der Kulturpflanze gegenüber Trockenheit, einem verbesserten Auswinterungsschutz der Kulturpflanze, einem verbesserten Hitzeschutz der Kulturpflanze, einer Qualitätssteigerung der Kulturpflanze, insbesondere zu einem erhöhten Proteingehalt, einer verbesserten Haltbarkeit oder einer verbesserten Transport- und/oder Lagerfähigkeit. Vorzugsweise wird bei diesen Ausführungsformen das Silizium in Form von Monokieselsäure und/oder in Form einer Polykieselsäure bereitgestellt wird, besonders bevorzugt wird das Silizium bei diesen Ausführungsformen in Form von stabilisierter Monokieselsäure und/oder in Form einer stabilisierten Polykieselsäure bereitgestellt.

Je nachdem in welcher Form Silizium hier zum Einsatz kommt, sind unterschiedliche Mengen an eingesetztem Silizium enthaltendem Stoffgemisch erforderlich.

Bei den Ausführungsformen, bei denen das Silizium enthaltende Stoffgemisch in Form von Silikaten, in Form von Monokieselsäure oder in Form einer Polykieselsäure bereitgestellt wird, beträgt in dem das Silizium enthaltenden Stoffgemisch die Konzentration von Silizium, vorzugsweise, berechnet als SiO₂, 50 g pro Hektar oder mehr und besonders bevorzugt von 100 g pro Hektar oder mehr. Bei bestimmten Ausführungsformen liegt die eingesetzte Menge bei weniger als 5000 g pro Hektar, bei weniger als 1000 g pro Hektar, bei weniger als 750 g pro Hektar oder gar bei weniger als 500 g pro Hektar.

Bei den Ausführungsformen, bei denen das Silizium enthaltende Stoffgemisch in Form von Silizium enthaltendem Gesteinsmehl, silikatischen Mineralien und/oder Siliziumdioxid bereitgestellt wird, liegt die eingesetzte Menge vorzugsweise bis 50 kg pro Hektar.

Bei bestimmten Ausführungsformen der Erfindung enthält das Silizium enthaltende Stoffgemisch zusätzlich noch mindestens einen Spurennährstoff, vorzugsweise ausgewählt aus einer Gruppe bestehend aus Eisen, Kupfer, Mangan, Bor, Molybdän, Nickel und Zink.

Vorzugsweise ist der mindestens eine Spurennährstoff in einer Menge von 1 g pro Hektar oder mehr, vorzugsweise von 5 g pro Hektar oder mehr, vorzugsweise von 10 g pro Hektar oder mehr enthalten.

Bei bevorzugten Ausführungsformen enthält das Stoffgemisch eine Kombination der folgenden Spurennährstoffe
- Kupfer in einer Menge von 1 g bis 250 g pro Hektar,
- Mangan in einer Menge von 1 g bis 250 g pro Hektar und/oder
- Zink in einer Menge von 1 g bis 250 g pro Hektar.

Bei bevorzugten Ausführungsformen enthält das Stoffgemisch eine Kombination der folgenden Spurennährstoffe
- Kupfer in einer Menge von 5 g bis 20 g pro Hektar,
- Mangan in einer Menge von 5 g bis 20 g pro Hektar und/oder
- Zink in einer Menge von 10 g bis 30 g pro Hektar.

Dabei ist bei bevorzugten Ausführungsformen der Gehalt an Zink größer als der Gehalt an Kupfer und/oder Mangan, vorzugsweise jeweils größer als der Gehalt an Mangan und der Gehalt an Kupfer.

In bestimmten Ausführungsformen, bei welchen das Silizium in Form von Monokieselsäure und/oder in Form einer Polykieselsäure bereitgestellt wird, insbesondere bei welchen das Silizium in Form von stabilisierter Monokieselsäure und/oder in Form einer stabilisierten Polykieselsäure bereitgestellt wird und welche zumindest Kupfer, Mangan oder Zink als Spurennährstoffe enthalten führt die Spritzung mit der Silizium enthaltenden Substanz gemäß dem modifizierten Anwendungsplan zu zumindest einem verbesserten Schutz der Kulturpflanze gegenüber Trockenheit, einem verbesserten Auswinterungsschutz der Kulturpflanze, einem verbesserten Hitzeschutz der Kulturpflanze, einer Qualitätssteigerung der Kulturpflanze, insbesondere zu einem erhöhten Proteingehalt, einer verbesserten Haltbarkeit oder einer verbesserten Transport- und/oder Lagerfähigkeit.

Bei bestimmten Ausführungsformen ist es insbesondere bevorzugt, wenn der mindestens eine Spurennährstoff in Form eines Chelats, vorzugsweise in Form eines Chelats von Ethylendiamintetraessigsäure, vorliegt.

Bei besonders bevorzugten Ausführungsformen enthält das Stoffgemisch eine Kombination der folgenden Spurennährstoffe, jeweils in chelatisierter Form
- Kupfer in einer Menge von 10 g pro Hektar,
- Mangan in einer Menge von 10 g pro Hektar und/oder
- Zink in einer Menge von 15 g pro Hektar.

Wie eingangs bereits erwähnt wurde, ist der Einsatz von Wachstumsreglern von vielen Faktoren abhängig, wie z.B. Pflanzensorte, Nährstoffversorgung, Wasserversorgung, Bodenart und Witterung. Vor diesem Hintergrund erfolgt das Bestimmen des konventionellen Anwendungsplans zweckmäßigerweise in Abhängigkeit von einem oder mehreren der folgenden Parameter, die ausgewählt sind aus einer Gruppe bestehend aus einer Art der Kulturpflanze, einer Sorte der Nutzpflanze, einer Bestandsdichte der Kulturpflanze auf der Ackerfläche, einer Bodenart des Ackers, einer Menge pro Ackerflächeneinheit einer Stickstoffdüngung des Ackers, einer Mischung des ersten oder des zweiten Wachstumsreglers mit einem weiteren Wachstumsregler, einem Schadorganismen bekämpfenden Pflanzenschutzmittel (z.B. Herbizid, Fungizid, Insektizid, Nematizid, Rodentizid) oder mit einem Düngemittel, einer zu erwartenden Stickstoff-Nachlieferung in dem Boden des Ackers, einem Entwicklungsstadium der Kulturpflanze, einer Wasserversorgung des Ackers, einem Witterungsverlauf vor dem Zeitpunkt für die erste Spritzung, einem erwarteten Witterungsverlauf nach dem Zeitpunkt für die erste Spritzung und einer zu erwartenden Strahlungsintensität der Sonne nach dem Zeitpunkt der ersten Spritzung, einen Hinweis in der Gebrauchsanleitung des ersten und/oder zweiten Wachstumsregler, einer örtlichen Beratung oder ökonomischen Erwägung oder einer Kombination davon.

Bei manchen Ausführungsformen der Erfindung erfolgt wenigstens eine Spritzung mit dem Silizium enthaltenden Stoffgemisch zu einem Zeitpunkt, zu dem die Kulturpflanze noch keine Blätter ausgebildet hat. Bei manchen Ausführungsformen der Erfindung erfolgt wenigstens eine Spritzung der Kulturpflanze mit dem Silizium enthaltenden Stoffgemisch zu einem Zeitpunkt, zu dem die Kulturpflanze bereits Blätter ausgebildet hat. Bei bestimmten Ausführungsformen der Erfindung erfolgt wenigstens eine Spritzung mit dem Silizium enthaltenden Stoffgemisch zu einem Zeitpunkt, zu dem die Kulturpflanze noch keine Blätter ausgebildet hat, und eine weitere Spritzung mit dem Silizium enthaltenden Stoffgemisch zu einem Zeitpunkt, zu dem die Kulturpflanze bereits Blätter ausgebildet hat. Bei den Ausführungsformen, bei denen wenigstens eine Spritzung der Kulturpflanze mit dem Silizium enthaltenden Stoffgemisch zu einem Zeitpunkt erfolgt, zu dem die Kulturpflanze bereits Blätter ausgebildet hat, erfolgt die Spritzung vorzugsweise gezielt auf die Bereiche, in denen die Kulturpflanze ihre Blätter ausgebildet hat.

### AUSFÜHRUNGSBEISPIELE

### Versuch 1

Beim Anbau einer Kultur von Winterweizen wurden durch Anwendung von erfindungsgemäß modifizierten Anwendungsplänen im Vergleich zu dem entsprechenden konventionellen Anwendungsplan die in der nachfolgenden Tabelle angegebenen höheren Erträge erzielt. Der Versuchsanbau erfolgte nach GEP-Standard gemäß der Verordnung (EU) Nr. 284/2013 und der Pflanzenschutzmittelverordnung.

| **Variante** | **EC 21-29 (Frühjahr)** | **EC 31/32** | **Ertrag in dt/ha** |
|---|---|---|---|
| Konventioneller Anwendungsplan | | 360 g pro Hektar Chlormequatchlorid + 75 g pro Hektar Trinexapac-ethyl | 104,7 |
| Modifizierter Anwendungsplan 1 | | 50 g pro Hektar Trinexapac-ethyl + 100 g pro Hektar Silizium (SiO₂), | 105,4 |
| | | 10g pro Hektar Kupfer als EDTA-Chelat, | |
| | | 10 g pro Hektar Mangan als EDTA-Chelat, | |
| | | 15 g pro Hektar Zink als EDTA-Chelat | |
| Modifizierter Anwendungsplan 2 | 100 g pro Hektar Silizium (SiO₂), | 50 g pro Hektar Trinexapac-ethyl + 100 g pro Hektar SiO₂, | 106,2 |
| | 10g pro Hektar Kupfer als EDTA-Chelat, | 10g pro Hektar Kupfer als EDTA-Chelat, | |
| | | 10 g pro Hektar Mangan als EDTA-Chelat, | |
| | 10 g pro Hektar Mangan als EDTA-Chelat, | | |
| | | 15 g pro Hektar Zink als EDTA-Chelat | |
| | 15 g pro Hektar Zink als EDTA-Chelat | | |

### Versuch 2

Beim Anbau einer Kultur von Winterweizen wurden durch Anwendung von erfindungsgemäß modifizierten Anwendungsplänen im Vergleich zu dem entsprechenden konventionellen Anwendungsplan die in der nachfolgenden Tabelle angegebenen höheren Erträge erzielt. Der Versuchsanbau erfolgte nach GEP-Standard gemäß der Verordnung (EU) Nr. 284/2013 und der Pflanzenschutzmittelverordnung.

| **Variante** | **EC 13-21 (Herbst)** | **EC 21-29 (Frühjahr)** | **EC 31132** | **EC 37/39** | **Ertrag in dt/ha** |
|---|---|---|---|---|---|
| Konventioneller Anwendungsplan | | 504 g pro Hektar Chlormequatchlorid | 288 g pro Hektar Chlormequatchlorid + 75 g pro Hektar Trinexapac-ethyl | 120 g pro Hektar Mepinquatchlorid, | 78,5 |
| | | | | 20 g pro Hektar Prohexadion-Calcium | |
| Modifizierter Anwendungsplan 1 | 100 g pro Hektar Silizium (SiO₂), | | 50 g pro Hektar Trinexapac-ethyl + 100 g pro Hektar Silizium (SiO₂), | 60 g pro Hektar Mepinquatchlorid, | 83,2 |
| | | | | 10 g pro Hektar Prohexadion-Calcium + 100 g pro Hektar Silizium (SiO₂), | |
| | 10 g pro Hektar Kupfer als EDTA-Chelat, | | | | |
| | | | 10 g pro Hektar Kupfer als EDTA-Chelat, | | |
| | 10 g pro Hektar Mangan als EDTA-Chelat, | | 10 g pro Hektar Mangan als EDTA-Chelat, | 10 g pro Hektar Kupfer als EDTA-Chelat, | |
| | | | 15 g pro Hektar Zink als EDTA-Chelat | 10 g pro Hektar Mangan als EDTA-Chelat, | |
| | 15 g pro Hektar Zink als EDTA-Chelat | | | | |
| | | | | 15 g pro Hektar Zink als EDTA-Chelat | |
| Modifizierter Anwendungsplan 2 | | 100 g pro Hektar Silizium (SiO₂), | 50g Trinexapac-ethyl + 100 g pro Hektar Silizium (SiO₂), | 60 g pro Hektar Mepinquatchlorid, | 81,7 |
| | | | | 10 g pro Hektar Prohexadion-Calcium + 100 g pro Hektar Silizium (SiO₂), | |
| | | 10 g pro Hektar Kupfer als EDTA-Chelat, | | | |
| | | | 10 g pro Hektar Kupfer als EDTA-Chelat, | | |
| | | 10 g pro Hektar Mangan als EDTA-Chelat, | 10 g pro Hektar Mangan als EDTA-Chelat, | 10 g pro Hektar Kupfer als EDTA-Chelat, | |
| | | | 15 g pro Hektar Zink als EDTA-Chelat | 10 g pro Hektar Mangan als EDTA-Chelat, | |
| | | 15 g pro Hektar Zink als EDTA-Chelat | | | |
| | | | | 15 g pro Hektar Zink als EDTA-Chelat | |

## Patentansprüche

1. Verfahren zur Behandlung einer Getreide-Kulturpflanze auf einer Ackerfläche nach einem modifizierten Anwendungsplan mit dem Schritt
Bestimmen eines konventionellen Anwendungsplans, welcher umfasst
eine erste Menge pro Ackerflächeneinheit eines ersten Wachstumsreglers für eine erste Spritzung der Kulturpflanze, wobei der erste Wachstumsregler ausgewählt ist unter Mepiquat, Trinexapac, Prohexadion oder einer Kombination hiervon, und
einen Zeitpunkt für die erste Spritzung,
eine zweite Menge pro Ackerflächeneinheit eines zweiten Wachstumsreglers für eine zweite Spritzung der Kulturpflanze, wobei der zweite Wachstumsregler Chlormequat ist, und
einen Zeitpunkt für die zweite Spritzung, wobei das Verfahren zusätzlich folgende Schritte aufweist:
Modifizieren des konventionellen Anwendungsplans, um einen modifizierten Anwendungsplan zu erhalten, wobei der modifizierte Anwendungsplan umfasst
eine dritte Menge pro Ackerflächeneinheit des ersten Wachstumsreglers für die erste Spritzung, wobei die dritte Menge pro Ackerflächeneinheit kleiner als die erste Menge pro Ackerflächeneinheit ist,
einen Zeitpunkt für die erste Spritzung der dritten Menge,
eine vierte Menge pro Ackerflächeneinheit des zweiten Wachstumsreglers für die zweite Spritzung, wobei die vierte Menge Null ist,
eine fünfte Menge pro Ackerflächeneinheit eines Silizium enthaltenden flüssigen Stoffgemischs für eine Spritzung und
einen Zeitpunkt für die Spritzung der fünften Menge pro Ackerflächeneinheit des Silizium enthaltenden Stoffgemischs, und
Behandeln der Kulturpflanze auf der Ackerfläche nach dem modifizierten Anwendungsplan, wobei in dem das Silizium enthaltenden Stoffgemisch die Konzentration von Silizium, berechnet als SiO₂, 25 g pro Hektar oder mehr beträgt.

2. Verfahren nach dem vorhergehenden Anspruch, wobei der Wachstumsregler ein natürliches Phytohormon oder dessen synthetisches Analogon ist oder ein Aktivator oder Inhibitor eines natürlichen Phytohormons ist oder ein Stoff ist, der in den pflanzlichen Phytohormon-Stoffwechsel regulierend eingreift.

3. Verfahren nach dem vorhergehenden Anspruch, wobei die dritte Menge pro Ackerflächeneinheit des ersten Wachstumsreglers 75 % oder weniger, vorzugsweise 50 % oder weniger und besonders bevorzugt 25 % oder weniger der ersten Menge pro Ackerflächeneinheit des ersten Wachstumsreglers beträgt.

4. Verfahren nach einem der vorhergehenden Ansprüche, wobei der Zeitpunkt für das Ausbringen des Silizium enthaltenden Stoffgemischs gleich dem Zeitpunkt für die erste Spritzung ist.

5. Verfahren nach einem der vorhergehenden Ansprüche, wobei der modifizierte Anwendungsplan umfasst
eine sechste Menge pro Ackerflächeneinheit eines Silizium enthaltenden Stoffgemischs für ein Ausbringen und
einen Zeitpunkt für das Ausbringen des Silizium enthaltenden Stoffgemischs mit der sechsten Menge pro Ackerflächeneinheit.

6. Verfahren nach einem der vorhergehenden Ansprüche, wobei das Silizium enthaltende Stoffgemisch Silizium in Form von Gesteinsmehl, vorzugsweise von Gesteinsmehl in einer Suspension, enthält oder Silizium in Form eines Silikats enthält oder Silizium in Form von Monokieselsäure oder einer Polykieselsäure enthält.

7. Verfahren nach einem der vorhergehenden Ansprüche, wobei in dem das Silizium enthaltenden Stoffgemisch die Konzentration von Silizium, berechnet als SiO₂, 50 g pro Hektar oder mehr und besonders bevorzugt 100 g pro Hektar oder mehr beträgt.

8. Verfahren nach einem der vorhergehenden Ansprüche, wobei das Silizium enthaltende Stoffgemisch mindestens einen Spurennährstoff, vorzugsweise ausgewählt aus einer Gruppe bestehend aus Eisen, Kupfer, Mangan, Bor, Molybdän, Nickel und Zink enthält.

9. Verfahren nach dem vorhergehenden Anspruch, wobei das Stoffgemisch den mindestens einen Spurennährstoff in einer Menge von 1 g pro Hektar oder mehr, vorzugsweise in einer Menge von 5 g pro Hektar oder mehr, vorzugsweise 10 g pro Hektar oder mehr enthält.

10. Verfahren nach Anspruch 10 oder 11, wobei der mindestens eine Spurennährstoff in Form eines Chelats, vorzugsweise in Form eines Chelats von Ethylendiamintetraessigsäure, vorliegt.

11. Verfahren nach einem der vorhergehenden Ansprüche, wobei das Bestimmen des konventionellen Anwendungsplans in Abhängigkeit eines Parameters erfolgt, der ausgewählt ist aus einer Gruppe bestehend aus einer Art der Kulturpflanze, einer Sorte der Kulturpflanze, einer Bestandsdichte der Kulturpflanze auf der Ackerfläche, einer Bodenart des Ackers, einer Menge pro Ackerflächeneinheit einer Stickstoffdüngung des Ackers, einer Mischung des ersten oder des zweiten Wachstumsreglers mit einem Pflanzenschutzmittel oder mit einem Düngemittel, einer zu erwartenden Stickstoff-Nachlieferung in dem Boden des Ackers, einem Entwicklungsstadium der Kulturpflanze, einer Wasserversorgung des Ackers, einem Witterungsverlauf vor dem Zeitpunkt für die erste Spritzung, einem erwarteten Witterungsverlauf nach dem Zeitpunkt für die erste Spritzung und einer zu erwartenden Strahlungsintensität der Sonne nach dem Zeitpunkt der ersten Spritzung, einen Hinweis in der Gebrauchsanleitung des ersten und/oder zweiten Wachstumsreglers, einer örtlichen Beratung oder ökonomischen Erwägung oder einer Kombination davon.

## Claims

1. Method for treating a cereal crop plant on a field area according to a modified application plan, comprising the step of
determining a conventional application plan, which comprises
a first amount per unit of the field area of a first growth regulator for a first spraying of the crop plant, wherein the first growth regulator is selected from mepiquat, trinexapac, prohexadione or a combination thereof, and
a point in time for the first spraying,
a second amount per unit of the field area of a second growth regulator for a second spraying of the crop plant, wherein the second growth regulator is chlormequat, and
a point in time for the second spraying,
the method additionally comprising the steps of:
modifying the conventional application plan to obtain a modified application plan, wherein the modified application plan comprises
a third amount per unit of the field area of the first growth regulator for the first spraying, wherein the third amount per unit of the field area is less than the first amount per unit of the field area,
a point in time for the first spraying of the third amount,
a fourth amount per unit of the field area of the second growth regulator for the second spraying, wherein the fourth amount is zero,
a fifth amount per unit of the field area of a liquid silicon-containing mixture of substances for a spraying, and
a point in time for spraying the fifth amount per unit of the field area of the silicon-containing mixture of substances, and
treating the crop plant on the field area according to the modified application plan,
wherein in the silicon-containing mixture, the concentration of silicon, calculated as SiO₂, is 25 g per hectare or more.

2. Method according to the preceding claim, wherein the growth regulator is a natural phytohormone or its synthetic analogue, or is an activator or inhibitor of a natural phytohormone, or is a substance that regulates plant phytohormone metabolism.

3. Method according to the preceding claim, wherein the third amount per unit of the field area of the first growth regulator is 75% or less, preferably 50% or less and particularly preferably 25% or less of the first amount per unit of the field area of the first growth regulator.

4. Method according to one of the preceding claims, wherein the point in time for applying the silicon-containing mixture of substances is the same as the point in time for the first spraying.

5. Method according to one of the preceding claims, wherein the modified application plan comprises
a sixth amount per unit of the field area of a silicon-containing mixture of substances for applying and
a point in time for applying the silicon-containing mixture of substances with the sixth amount per unit of the field area.

6. Method according to one of the preceding claims, wherein the silicon-containing mixture contains silicon in the form of rock flour, preferably rock flour in suspension, or contains silicon in the form of a silicate, or contains silicon in the form of monosilicic acid or a polysilicic acid.

7. Method according to one of the preceding claims, wherein in the silicon-containing mixture of substances, the concentration of silicon, calculated as SiO₂, is 50 g per hectare or more and, particularly preferably, 100 g per hectare or more.

8. Method according to one of the preceding claims, wherein the silicon-containing mixture of substances contains at least one trace nutrient, preferably selected from a group consisting of iron, copper, manganese, boron, molybdenum, nickel and zinc.

9. Method according to the preceding claim, wherein the mixture of substances contains the at least one trace nutrient in an amount of 1 g per hectare or more, preferably in an amount of 5 g per hectare or more, preferably 10 g per hectare or more.

10. Method according to claim 10 or 11, wherein the at least one trace nutrient is present in the form of a chelate, preferably in the form of a chelate of ethylenediaminetetraacetic acid.

11. Method according to one of the preceding claims, wherein the determination of the conventional application plan is made depending on a parameter selected from a group consisting of a type of crop plant, a variety of crop plant, a plant density of the crop plant on the field area, a soil type of the field area, an amount per unit of the field area of nitrogen fertilisation of the field, a mixture of the first or second growth regulator with a plant protection product or with a fertiliser, an expected nitrogen replenishment in the soil of the field area, a stage of development of the crop plant, a water supply to the field area, weather conditions prior to the point in time of the first spraying, expected weather conditions after the point in time of the first spraying and expected solar radiation intensity after the point in time of the first spraying, information in the instructions for use of the first and/or second growth regulator, local advice or economic considerations, or a combination thereof.

## Revendications

1. Procédé de traitement d'une plante de culture céréalière sur une surface arable selon un plan d'application modifié, comprenant l'étape consistant à :
déterminer un plan d'application conventionnel qui comprend :
une première quantité, par unité de surface arable, d'un premier régulateur de croissance pour une première pulvérisation de la plante de culture, le premier régulateur de croissance étant sélectionné parmi le mépiquat, le trinexapac, le prohexadione, ou une combinaison de ceux-ci, et
un instant pour la première pulvérisation,
une deuxième quantité, par unité de surface arable, d'un second régulateur de croissance pour une seconde pulvérisation de la plante de culture, le second régulateur de croissance étant le chlorméquat, et
un instant pour la seconde pulvérisation,
dans lequel le procédé comprend en outre les étapes suivantes consistant à : modifier le plan d'application conventionnel afin d'obtenir un plan d'application modifié, le plan d'application modifié comprenant :
une troisième quantité, par unité de surface arable, du premier régulateur de croissance pour la première pulvérisation, la troisième quantité par unité de surface arable étant inférieure à la première quantité par unité de surface arable,
un instant pour la première pulvérisation de la troisième quantité,
une quatrième quantité, par unité de surface arable, du second régulateur de croissance pour la seconde pulvérisation, la quatrième quantité étant nulle,
une cinquième quantité, par unité de surface arable, d'un mélange de substances liquides contenant du silicium, en vue d'une pulvérisation, et
un instant pour la pulvérisation de la cinquième quantité par unité de surface arable du mélange de substances contenant du silicium, et
traiter la plante de culture, sur la surface arable, selon le plan d'application modifié, la concentration de silicium, calculée en SiO₂, dans le mélange de substances contenant du silicium étant supérieure ou égale à 25 g par hectare.

2. Procédé selon la revendication précédente, dans lequel le régulateur de croissance est une phytohormone naturelle ou son analogue synthétique, ou est un activateur ou un inhibiteur d'une phytohormone naturelle, ou est une substance qui agit de manière régulatrice sur le métabolisme végétal de la phytohormone.

3. Procédé selon la revendication précédente, dans lequel la troisième quantité par unité de surface arable du premier régulateur de croissance est inférieure ou égale à 75 %, de préférence inférieure ou égale à 50 %, et de manière particulièrement préférée inférieure ou égale à 25 %, de la première quantité, par unité de surface arable, du premier régulateur de croissance.

4. Procédé selon l'une des revendications précédentes, dans lequel l'instant de l'application du mélange de substances contenant du silicium est égal à l'instant de la première pulvérisation.

5. Procédé selon l'une des revendications précédentes, dans lequel le plan d'application modifié comprend
une sixième quantité, par unité de surface arable, d'un mélange de substances contenant du silicium, en vue d'un épandage et
un instant pour l'épandage du mélange de substances contenant du silicium avec la sixième quantité par unité de surface arable.

6. Procédé selon l'une des revendications précédentes, dans lequel le mélange de substances contenant du silicium contient du silicium sous la forme de poudre de roche, de préférence de poudre de roche dans une suspension, ou contient du silicium sous la forme d'un silicate, ou contient du silicium sous la forme d'acide monosilicique ou d'un acide polysilicique.

7. Procédé selon l'une des revendications précédentes, dans lequel la concentration de silicium, calculée en SiO₂, dans le mélange de substances contenant du silicium est supérieure ou égale à 50 g par hectare, et de manière particulièrement préférée supérieure ou égale à 100 g par hectare.

8. Procédé selon l'une des revendications précédentes, dans lequel le mélange de substances contenant du silicium contient au moins un oligo-élément, de préférence sélectionné dans un groupe constitué du fer, du cuivre, du manganèse, du bore, du molybdène, du nickel et du zinc.

9. Procédé selon la revendication précédente, dans lequel le mélange de substances contient le ou les oligo-éléments, au moins au nombre de un, en une quantité supérieure ou égale à 1 g par hectare, de préférence en une quantité supérieure ou égale à 5 g par hectare, de préférence supérieure ou égale à 10 g par hectare.

10. Procédé selon la revendication 10 ou 11, dans lequel le ou les oligo-éléments, au moins au nombre de un, sont présents sous la forme d'un chélate, de préférence sous la forme d'un chélate d'acide éthylènediaminetétraacétique.

11. Procédé selon l'une des revendications précédentes, dans lequel la détermination du plan d'application conventionnel intervient en fonction d'un paramètre sélectionné dans un groupe constitué de l'espèce de plante de culture, de la variété de la plante de culture, de la densité de peuplement de la plante de culture sur la surface arable, du type de sol du champ, de la quantité par unité de surface arable d'une fertilisation azotée du champ, du mélange du premier ou du second régulateur de croissance avec un produit phytosanitaire ou avec un engrais, du relargage attendu d'azote dans le sol du champ, du stade de développement de la plante de culture, de l'alimentation en eau du champ, de l'évolution des conditions météorologiques avant l'instant de la première pulvérisation, de l'évolution attendue des conditions météorologiques après l'instant de la première pulvérisation et de l'intensité de rayonnement solaire attendue après l'instant de la première pulvérisation, d'une préconisation indiquée dans les instructions d'utilisation du premier et/ou du second régulateur de croissance, d'une consultation au niveau local ou d'une considération économique ou d'une combinaison desdits paramètres.
